# EUROPEAN PATENT APPLICATION

(11) **EP 2 098 348 A1**
(43) Date of publication of application: **09.09.2009**
(21) Application number: 07831578.5
(22) Date of filing: 09.11.2007
(51) Int. Cl.: B28B 11/02, B01D 39/20, C04B 37/00, F01N 3/022

(54) **PROCESS FOR PRODUCING PLUGGED HONEYCOMB STRUCTURE**

(30) Priority: 27.12.2006 JP 2006353284
(71) Applicant: NGK INSULATORS, LTD., Nagoya-shi, Aichi 467-8530 (JP)
(72) Inventor: ITO, Koichi, Nagoya-shi Aichi 467-8530 (JP); TOKUNAGA, Takeshi, Nagoya-shi Aichi 467-8530 (JP)
(74) Representative: Paget, Hugh Charles Edward
(86) International application number: PCT/JP2007/071847
(87) International publication number: WO 2008/078463

(57) **Abstract**

A method for manufacturing a plugged honeycomb structure 30 which comprises attaching a mask film 4 to an end surface 11; making holes 3 at selected portions corresponding to the predetermined cell opening end portions 7; applying a pretreating agent 20 containing at least one component compatible with a dispersion medium for slurry for plugging the predetermined cell opening end portions 7 to partition walls 10 at the predetermined cell opening end portions 7, then submerging, in a plugging slurry 6, the end surface 11 of the material to which the perforated mask film 4 has been attached to fill the predetermined cell opening end portions 7 with the plugging slurry 6.

## Description

### Technical Field

The present invention relates to a manufacturing method of a plugged honeycomb structure which can preferably be used in a filter such as a diesel particulate filter and in which predetermined cells at an end surface of the structure are plugged.

### Background Art

As a dust collecting filter typified by a diesel particulate filter (DPF), a ceramic filter having a honeycomb structure is used. Such a filter has a honeycomb structure having a large number of cells which are separated and formed by porous partition walls so as to constitute passages of a fluid, and each cell is plugged at one end portion opposite to that of an adjacent cell so that each end surface of the honeycomb structure has a checkered pattern.

When an exhaust gas containing fine particles such as particulates is gotten into one end surface of this filter (a plugged honeycomb structure), this exhaust gas flows into the structure from the cells having the end portions which are not plugged on the side of the aforementioned end surface, passes through the porous partition walls and enters the other cells having end portions which are not plugged on the side of the other end surface of the structure. Then, when the exhaust gas passes through these partition walls, the fine particles in the exhaust gas are trapped by the partition walls, and the cleaned exhaust gas from which the fine particles have been removed is discharged from the other end surface of the honeycomb structure.

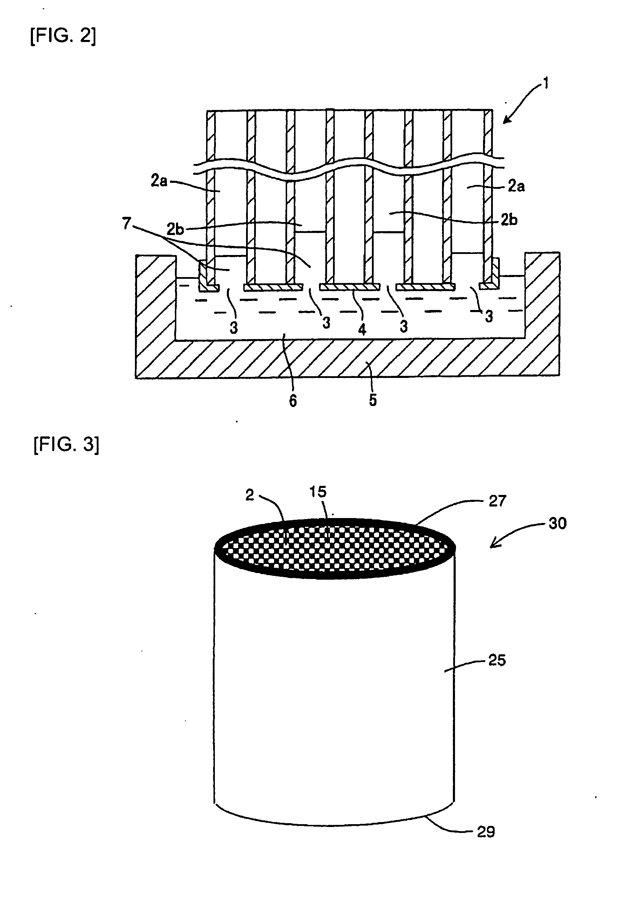

Usually, to manufacture the plugged honeycomb structure having such a structure, a method is employed in which as shown in Fig. 2, a mask film 4 to constitute a mask is attached to an end surface of a honeycomb base material 1, holes 3 are provided at positions corresponding to opening end portions (cell opening end portions 7) of predetermined cells 2a, 2b of this mask film 4, and an end portion of the honeycomb base material 1 is submerged in a plugging slurry 6 stored in a container 5, whereby the plugging slurry 6 permeates the predetermined cell opening end portions 7 through the holes 3 of the mask film 4 (for example, see Patent Document 1).

In a case where the opening end portions of the predetermined cells are plugged by such a method, the plugging slurry 6 does not sometimes permeate to a desired depth of the cells 2a, 2b. Moreover, the permeation depth of the plugging slurry 6 is not sometimes uniform, and there has been a problem that it is difficult to manufacture a homogeneous plugged honeycomb structure. In a case where the permeation depth of the plugging slurry which permeates the respective cells to be plugged is not uniform, variations arise in a pressure loss of each cell of the resultant plugged honeycomb structure, and a disadvantage such as variance in an accumulation amount of filtered matters easily occurs.

As a concerned conventional technology for solving the above problems, a method is disclosed in which the plugging slurry having thixotropy is used, and this plugging slurry permeates the predetermined cells of the honeycomb base material while being vibrated (for example, see Patent Documents 2, 3).

However, even in the methods disclosed in Patent Documents 2, 3, there is a case where the plugging slurry 6 does not necessarily permeate to the desired depth of the cells 2a, 2b, and the permeation depth is not uniform. In addition, since a device for vibrating the plugging slurry is required, equipment tends to enlarge and become complicated.

[Patent Document 1] JP-A-2001-300922
[Patent Document 2] JP-A-6-190218
[Patent Document 3] JP-A-6-190224

### Disclosure of the Invention

The present invention has been developed in view of such problems of the conventional technology, and an object thereof is to provide a manufacturing method of a plugged honeycomb structure in which plugging slurry can uniformly permeate to a desired depth of the cells, and a product defect such as plugging failure rarely generates.

That is, according to the present invention, the following manufacturing method of a plugged honeycomb structure is provided.

[1] A manufacturing method of a plugged honeycomb structure in which opening end portions of predetermined cells of a cylindrical honeycomb base material having a plurality of cells separated by partition walls between end surfaces of the honeycomb base material are filled with a plugging slurry containing a dispersion medium for the slurry, and then fired to form plugging portions at the opening end portions of the predetermined cells, the method comprising: an attaching step of attaching a mask film to the end surface of the honeycomb base material; a perforation step of making holes at portions of the mask film corresponding to the opening end portions of the predetermined cells; and a filling step of applying a pretreating agent containing at least one component compatible with the dispersion medium for the slurry to at least the partition walls at the opening end portions of the predetermined cells, and then submerging, in the plugging slurry, the end surface of the honeycomb base material to which the mask film has been attached to fill the opening end portions of the predetermined cells with the plugging slurry.

[2] The manufacturing method of the plugged honeycomb structure according to the above [1], wherein said at least one component compatible with the dispersion medium for the slurry is a component which can decompose or disappear when fired.

[3] The manufacturing method of the plugged honeycomb structure according to the above [1] or [2], wherein the component is at least one selected from the group consisting of water, a surfactant, glycerin, acetone, methanol, ethanol, toluene and benzene.

According to the manufacturing method of the plugged honeycomb structure of the present invention, it is possible to easily manufacture the plugged honeycomb structure in which the plugging slurry can uniformly permeate to a desired depth of the cells and a product defect such as plugging failure rarely generates.

### Brief Description of the Drawings

[Fig.1] Fig. 1 is a schematic diagram showing a part of one embodiment of a manufacturing method of a plugged honeycomb structure according to the present invention;
[Fig.2] Fig. 2 is a schematic diagram showing a conventional step in which a plugging slurry permeates cell opening end portions; and
[Fig.3] Fig. 3 is a perspective view showing one example of the plugged honeycomb structure.

### Description of Reference Numerals

1: honeycomb base material, 2, 2a, 2b: cell, 3: partition wall, 4: mask film, 5: container, 6: plugging slurry, 7: cell opening end portion, 10: partition wall, 11, 27, 29: end face, 15: plugging portion, 20: pretreating agent, 25: outer peripheral wall, 30: plugged honeycomb structure

### Best Mode for Carrying out the Invention

The best mode for carrying out the present invention will hereinafter be described, however, it should be understood that the present invention is not limited to the following embodiment and that appropriate modification, improvement and the like of the following embodiment based on ordinary knowledge of a person skilled in the art fall in the scope of the present invention.

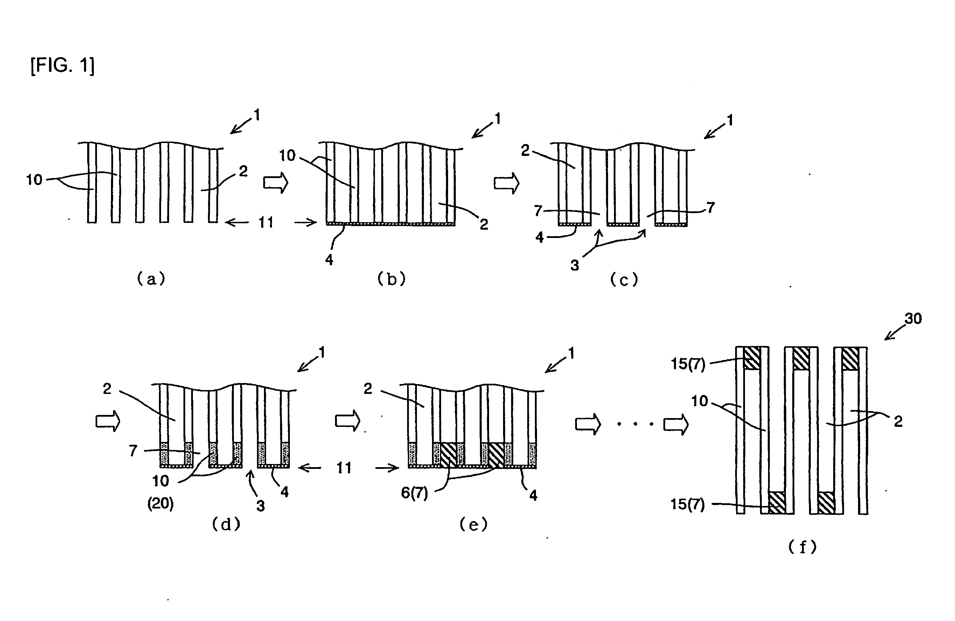

Fig. 1 is a schematic diagram showing a part of one embodiment of a manufacturing method of a plugged honeycomb structure according to the present invention.
The manufacturing method of the plugged honeycomb structure according to the present embodiment is a method of manufacturing a plugged honeycomb structure 30 in which opening end portions (cell opening end portions 7) of predetermined cells 2 of a cylindrical honeycomb base material 1 having a plurality of cells 2 separated by partition walls 10 between end surfaces 11 are filled with a plugging slurry 6, and then fired to form plugging portions 15 at the opening end portions 7 of the predetermined cells. The manufacturing method of the plugged honeycomb structure of the present invention will hereinafter be described in more detail.

In the manufacturing method of the plugged honeycomb structure according to the present embodiment, first the cylindrical honeycomb base material 1 having the plurality of cells 2 separated by the partition walls 10 between the end surfaces 11 is prepared (Fig. 1(a)).

To prepare the honeycomb base material 1, first there is used, as a material, powder of one type of material selected from the group consisting of a ceramic such as cordierite, mullite, alumina, spinel, zirconia, silicon carbide, a silicon carbide-cordierite based composite material, a silicon-silicon carbide based composite material, silicon nitride, lithium aluminum silicate, aluminum titanate or zeolite; a metal such as an Fe-Cr-Al based metal; and a combination of these materials. To this material, a binder such as methyl cellulose or hydroxyl propoxyl methyl cellulose is added, and further a surfactant and water are added to obtain a mixed material. Subsequently, the resultant mixed material is formed into plastic clay, extruded and formed into a honeycomb shape, and then dried or fired, so that the honeycomb base material 1 can be prepared.

In the attaching step, a mask film 4 is attached to the end surface 11 of the honeycomb base material 1 (Fig. 1(b)). There is not any special restriction on a type of the mask film 4, however, for example, a film which can melt by heating and which is susceptible to perforation by irradiation with laser light is preferable. It is also preferable to use, as the mask film 4, a film having an adhesive layer so as to be fixed on the end surface 11 of the honeycomb base material 1. Specific examples of such a film include a film having a base layer constituted of a polymer material such as polyester, polyolefin or halogenated polyolefin, and the adhesive layer laminated on this base layer and constituted of an acrylic adhesive material. From viewpoints of strength and ease of making holes, it is preferable that a thickness of the mask film 4 is about 10 to 100 µm.

In the perforation step, holes 3 are made at portions of the mask film 4 corresponding to the opening end portions 7 of the predetermined cells (Fig. 1(c)). There is not any special restriction on a method of making the holes 3 in the mask film 4, however, for example, a method of making the holes 3 by laser irradiation is suitable. Moreover, the holes 3 may be made one by one in the mask film 4 with one needle, or a large number of holes 3 may collectively be made using pinholder-like needles having a pitch corresponding to that of the predetermined cell opening end portions 7. However, it is preferable that an image of the end surface 11 of the honeycomb base material 1 is processed to extract positions of the cells 2 in which the holes 3 are to be made, and the holes 3 are made at the extracted positions by use of a laser marker, so that even the honeycomb base material 1 in which the pitch and an opening shape of the cells 2 are not constant can flexibly be handled.

In the filling step, first, a pretreating agent 20 containing at least one component compatible with the dispersion medium for the slurry contained in the plugging slurry is applied to at least the partition walls 10 at the predetermined cell opening end portions 7 (Fig. 1(d)). The plugging slurry can be prepared by mixing at least ceramic powder and the dispersion medium for the slurry.
Preferable examples of the dispersion medium for the slurry include water or an organic solvent such as acetone, methanol, ethanol, and the like.

To the plugging slurry, if necessary, an additive such as a binding agent or deflocculant may further be added. There is not any special restriction on a type of the ceramic powder, however, for example, silicon carbide powder, cordierite powder or the like may preferably be used. As the binding agent, a resin such as polyvinyl alcohol (PVA) may be used, however, it is more preferable to use a thermal gel-setting binding agent having a property of gelating by heating. As the thermal gel setting binding agent, methyl cellulose may preferably be used. It is to be noted that a viscosity of the plugging slurry is usually 100 to 2,000,000 mPa•s, preferably 500 to 1,500,000 mPa•s, further preferably about 1,000 to 1,000,000 mPa•s.

The component compatible with the dispersion medium for the slurry (hereinafter referred to as compatible component, too) which is contained in the pretreating agent 20 and which is soluble to the dispersion medium for the slurry is appropriately selected in accordance with a type of the dispersion medium for the slurry, however, considering that the plugging slurry is filled and then fired, a component which can decompose or disappear when fired is preferable. As for such a compatible component, in a case where the dispersion medium for the slurry is water, for example, water or a solvent having a hydrophilic group is preferable. Moreover, when the dispersion medium for the slurry is an organic solvent such as methanol, ethanol or acetone, as the compatible component, an organic solvent such as methanol or ethanol or the like is preferable. Preferable examples of the compatible component include water, a surfactant, glycerin, acetone, methanol, ethanol, toluene and benzene. It is to be noted that these compatible components may be used alone or as a combination of two or more of them.

The pretreating agent 20 contains one or more of the above-mentioned compatible components. It is to be noted that it is also preferable to use the above compatible component itself as the pretreating agent 20.
It is presumed that in a case where such a pretreating agent 20 is applied to the partition walls 10 at the predetermined cell opening end portions 7, when the walls are dried, voids are formed, the pretreating agent 20 appropriately penetrates into the porous partition walls 10, and a coat made of the pretreating agent 20 is formed. It is preferable that a viscosity of the pretreating agent 20 is 1,000 mPa•s or less, because then the agent easily penetrates into the partition walls 10. The viscosity is further preferably 500 mPa•s, especially preferably 10 mPa•s or less. When the viscosity of the pretreating agent 20 exceeds 1,000 mPa•s, the voids of the partition walls 10 can more completely be closed. On the other hand, in the subsequent step, it tends to be difficult to retain a shape of the plugging slurry to be filled in the cell opening end portions 7, and sometimes a plugging failure is generated easily. It is to be noted that there is not any special restriction on a lower limit value of the viscosity of the pretreating agent 20, however, the value may be 1 mPa•s or more from a viewpoint of substantial usability.

Moreover, in a case where a component which is hardly compatible or not compatible with the dispersion medium for the slurry is used as the pretreating agent 20, this pretreating agent 20 easily penetrates into the voids of the partition walls 10. On the other hand, in the subsequent step, the plugging slurry to be filled in the cell opening end portions 7 is not easily attached to the honeycomb base material 1, and sometimes the plugging failure is easily generated. It is to be noted that there is not any special restriction on a method of coating the partition walls 10 with the pretreating agent 20, however, examples of the method include submersion of the honeycomb base material in the pretreating agent stored in a container, spraying with a sprayer, and brush coating.

In the filling step, subsequent to the application of the pretreating agent 20, the end surface 11 of the honeycomb base material 1 to which the mask film 4 has been attached is submerged in the plugging slurry to fill the predetermined cell opening end portions 7 with the plugging slurry 6 (Fig. 1(e)). At this time, the pretreating agent 20 containing one or more compatible components which are compatible with the dispersion medium for the slurry is applied to the partition walls 10 at the cell opening end portions 7. Therefore, the plugging slurry 6 containing the slurry dispersion medium which can be dissolved in the compatible component contained in the pretreating agent 20 easily permeate the cell opening end portions 7 with a low resistance, and easily permeates to a desired depth. Therefore, it is possible to easily manufacture the plugged honeycomb structure in which a product defect such as plugging failure rarely generates and a plugging depth of the plugging portion is more accurately controlled to a desired depth. It is to be noted that when introducing the plugging slurry 6, if necessary, the honeycomb base material 1 may be pressed onto the plugging slurry 6 so as to more securely fill the cell opening end portions 7 with the plugging slurry 6.

Afterward, the other end surface of the honeycomb base material 1 is successively and repeatedly subjected to the above-mentioned attaching step, perforation step and filling step, and then dried, heated and/or fired, so that the plugged honeycomb structure 30 provided with the plugging portions 15 can be manufactured (Fig. 18(f)). It is to be noted that, in general, the plugged honeycomb structure 30 can be manufactured by performing the filling step of introducing the plugging slurry 6 into the predetermined cell opening end portions 7, and then performing the firing, however, the filling step may be performed to either a honeycomb formed body (dried body) before firing, or the honeycomb fired body after firing.

As shown in Fig. 3, for example, in the plugged honeycomb structure 30 manufactured according to the manufacturing method of the plugged honeycomb structure of the present invention, there is not any restriction on a shape or the like of the structure, as long as the plurality of cells 2 are formed by the porous partition walls and extend from one end surface 27 to the other end surface 29 in an axial direction, and the cells 2 have the plugging portions 15 arranged so as to plug the cells 2 at either of the end surfaces 27, 29. It is to be noted that reference numeral 25 in Fig. 3 is an outer peripheral wall which surrounds an outer periphery of the partition walls.

A sectional shape of the plugged honeycomb structure orthogonal to an extending direction of the cells can appropriately be determined from a circular shape, an elliptic shape, a race-track-like shape, a quadrangular shape and the like based on an application and an installation place. The sectional shape of the cell orthogonal to the extending direction of the cell may be selected from a polygonal shape such as a triangular shape, a quadrangular shape or a hexagonal shape, a substantially polygonal shape, a circular shape and a substantially circular shape such as an elliptic shape. A cell density is usually set to 6 to 2000 cells/square inch (0.9 to 311 cells/cm²), preferably about 50 to 1000 cells/square inch (7.8 to 155 cells/cm²). As shown in Fig. 3, it is preferable that the plugging portions 15 are formed at the adjacent cells 2 in the opposite end surfaces 27, 29 and that the plugging portions 15 are arranged so that the end surfaces 27, 29 have a checkered pattern. It is to be noted that when the plugged honeycomb structure 30 is used as a catalyst carrier or a filter, it is preferable that the partition walls and the outer peripheral wall 25 are porous.

### Example

The present invention will hereinafter be described specifically in accordance with examples, however, the present invention is not limited to these examples.

### (Preparation of Honeycomb Base Material)

A mixed material made of cordierite, an organic binder, a pore former and water was formed into a honeycomb shape, and then dried to prepare a cylindrical honeycomb base material having a diameter of 5.66 inches (144 mm) and a length of 6 inches (152 mm). In the prepared honeycomb base material, a cell had a square sectional shape orthogonal to an extending direction of the cell, partition walls had a thickness of about 0.3 mm, and a cell density was 300 cells/square inch.

### (Preparation of Plugging slurry)

To 100 parts by mass of cordierite powder, 1.5 parts by mass of methyl cellulose, 8 parts by mass of glycerin and 40 parts by mass of water were added, and kneaded to prepare the plugging slurry. It is to be noted that the prepared plugging slurry had a viscosity of 200 mPa•s.

### (Example 1)

A film for a mask (material: polyester, thickness: mm, trade name "Masking Tape", manufactured by 3M Co.) was attached to one end surface of a honeycomb base material, and holes were made at portions of the attached film for the mask corresponding to the predetermined cell opening end portions (so as to obtain a checkered pattern) by use of laser. Subsequently, the end surface of the honeycomb base material provided with the film for the mask was submerged to a depth of 5 mm in water as a pretreating agent, and water was attached to partition walls of the cell opening end portions. Afterward, the end surface of the honeycomb base material provided with the film for the mask was submerged to a depth of 5 mm in the plugging slurry, and the cell opening end portions were filled with the plugging slurry through holes of the film for the mask.

After pulling up the honeycomb base material from the plugging slurry, the material was dried at 100°C for 120 seconds. Afterward, in the same manner as in one end surface of the honeycomb base material described above, the other end surface was subjected to the attachment of the film for the mask, the perforation using the laser, the submersion in the pretreating agent (water) and the submersion in the plugging slurry, and then the cell opening end portions at the other end surface of the honeycomb base material were filled with the plugging slurry. The material was dried at 100°C for 120 seconds, and fired for 50 hours to manufacture the plugged honeycomb structure.

When an average plugging depth (mm (17 points)) of the plugging portions at one end surface of the manufactured plugged honeycomb structure was measured, the depth was 4.99 mm. When presence of plugging failure was checked, there was zero portion of the plugging failure.

### (Examples 2 to 6, Comparative Examples 1 to 6)

Plugged honeycomb structures were manufactured in the same manner as in Example 1 except that a pretreating agent shown in Table 1 was used (with the proviso that any pretreating agent was not used in Comparative Example 1). Plugging portions of each of the manufactured plugged honeycomb structures were measured and evaluated in the same manner as in Example 1. Results are shown in Table 1.

**[Table 1]**

| | pretreating agent | | Average plugging depth (mm(17 points)) | Evaluation of presence of plugging failure^{*1} |
|---|---|---|---|---|
| | component used | Viscosity (mPa•s) | | |
| Example 1 | Water | 1 | 4.99 | ○ |
| Example 2 | Surfactant | 1 | 4.88 | ○ |
| Example 3 | Glycerin(90%) | 900 | 4.69 | ○ |
| Example 4 | Glycerin(80%) | 500 | 4.92 | ○ |
| Example 5 | Acetone | 1 | 5.21 | ○ |
| Example 6 | Methanol | 2 | 4.97 | ○ |
| Comparative Example 1 | None | - | 1.32 | △ |
| Comparative Example 2 | Grease 50 | 0.54 | | × |
| Comparative Example 3 | Paraffin wax | 4 | 0.94 | × |
| Comparative Example 4 | Beeswax | 4 | 0.87 | × |
| Comparative Example 5 | Rapeseed oil | 100 | 0.99 | × |

| | | | | |
|---|---|---|---|---|
| *1 ... "○": No plugging failure (0 portion) "Δ": 1 to 20 portions of plugging failure "×": Over 20 portions of plugging failure | | | | |

As shown in Table 1, in the methods of Examples 1 to 6, as compared with the methods of Comparative Examples 1 to 6, it is clear that the plugging slurry permeates to a desired depth and the plugging portion having a sufficient depth is formed. According to the methods of Examples 1 to 6, it is also clear that the plugged honeycomb structure having an excellent quality can be manufactured without causing the plugging failure.

### Industrial Applicability

A manufacturing method of a plugged honeycomb structure according to the present invention is suitable as a method of manufacturing a plugged honeycomb structure for use in a filter such as DPF.

## Claims

1. A manufacturing method of a plugged honeycomb structure in which opening end portions of predetermined cells of a cylindrical honeycomb base material having a plurality of cells separated by partition walls between end surfaces of the honeycomb base material are filled with a plugging slurry containing a dispersion medium for the slurry, and then fired to form plugging portions at the opening end portions of predetermined cells, the method comprising:
attaching a film for a mask to the end surface of the honeycomb base material;
making holes at portions of the film for a mask corresponding to the opening end portions of the predetermined cells; and
applying a pretreating agent containing at least one compatible component compatible with a dispersion medium for slurry to at least the partition walls at the opening end portions of the predetermined cells, and then submerging, in the plugging slurry, the end surface of the honeycomb base material to which the film for the mask has been attached to fill the opening end portions of the predetermined cells with the plugging slurry.

2. The manufacturing method of the plugged honeycomb structure according to claim 1, wherein said at least one compatible component is a component which can decompose or disappear when fired.

3. The manufacturing method of the plugged honeycomb structure according to claim 1 or 2, wherein the component is at least one selected from the group consisting of water, a surfactant, glycerin, acetone, methanol, ethanol, toluene and benzene.
